# EUROPEAN PATENT SPECIFICATION

(11) **EP 0 245 967 B1**
(45) Date of publication and mention of the grant of the patent: **07.07.1993**
(21) Application number: 87303292.4
(22) Date of filing: 14.04.1987
(51) Int. Cl.: C08L 23/16, C08J 3/24, C08K 5/00, C08K 3/36

(54) **Vulcanization of ethylene/alpha-olefin rubbers**
Vulkanisieren von Äthylen/alpha-Olefin-Gummis
Vulcanisation de caoutchoucs d'éthylène/alpha-oléfine

(30) Priority: 14.04.1986 JP 85802/86
(43) Date of publication of application: 19.11.1987
(73) Proprietor: SUMITOMO CHEMICAL COMPANY, LIMITED, Chuo-ku Osaka 541 (JP)
(72) Inventor: Takao, Hiroyoshi, Chiba-shi (JP); Tanimoto, Yoshio, Sakura-shi (JP); Ikeda, Kiyosi, Ichihara-shi (JP)
(74) Representative: Lamb, John Baxter

(56) References cited:
- EP-A- 0 078 603
- BE-A- 679 764
- DE-A- 2 611 208
- DE-A- 3 343 676
- US-A- 4 467 061

## Description

This invention relates to the vulcanization of ethylene/α-olefin rubbers to provide vulcanized compositions having a high strength, good thermal resistance, good weather resistance and high transparency.

End uses of rubber compositions which require a high strength, thermal resistance and weather resistance together with a high transparency include uses as automotive parts, industrial goods, electrical parts, etc. Rubber compositions having such properties can be used, for example, as materials for tubes, hoses, sheets, rolls, and the see-through part of masks and the like. Further, they can be used to form composite materials by combining them with glasses or with transparent resins such as polymethyl methacrylate or polycarbonate resins.

It is known that rubber compositions with some transparency, so-called "semi-translucent rubbers", can be obtained by adding silica and/or magnesium carbonate as a reinforcing filler to an ethylene/α-olefin rubber. However, the products have a low total light transmittance and a high haze value.

We have already found that vulcanized rubber compositions having a high total light transmittance and a low haze value may be obtained by vulcanizing, using an organic peroxide, an unvulcanized rubber composition comprising a ethylene/α-olefin rubber together with from 10 to 70 parts by weight, per hundred parts by weight of rubber, of anhydrous silica having an average primary particle diameter of 20 nm or less, the rubber having no added oxides or metal carbonates (see Japanese Patent Application No. 183,753/85).

However, these rubber compositions are still of low strength and unsatisfactory in thermal resistance, weather resistance, etc. because they contain no added metal oxide nor metal carbonate added therto. The production of opaque vulcanized rubber compositions is described, for example, in US-A-4467061 and DE-A 3343676.

It is an object of this invention to provide an improved ethylene/α-olefin vulcanized rubber composition which has a high strength, good thermal resistance and weather resistance, and further, a high total light transmittance and low haze value.

The present inventors have made extensive studies to develop such a vulcanized rubber composition and resultantly attained this invention.

According to the invention there is provided a process for the production of a vulcanized ethylene/α-olefin rubber which comprises vulcanizing, with an organic peroxide, an unvulcanized rubber composition comprising an ethylene/α-olefin rubber containing no added metal oxide nor metal carbonate added thereto and which contains, per 100 parts by weight of ethylene/α-olefin:
(i) from 10 to 70 parts by weight of anhydrous silica having an average primary particle diameter of 20 nm or less;
(ii) 0.01 to 2 parts by weight of at least one compound of the formula 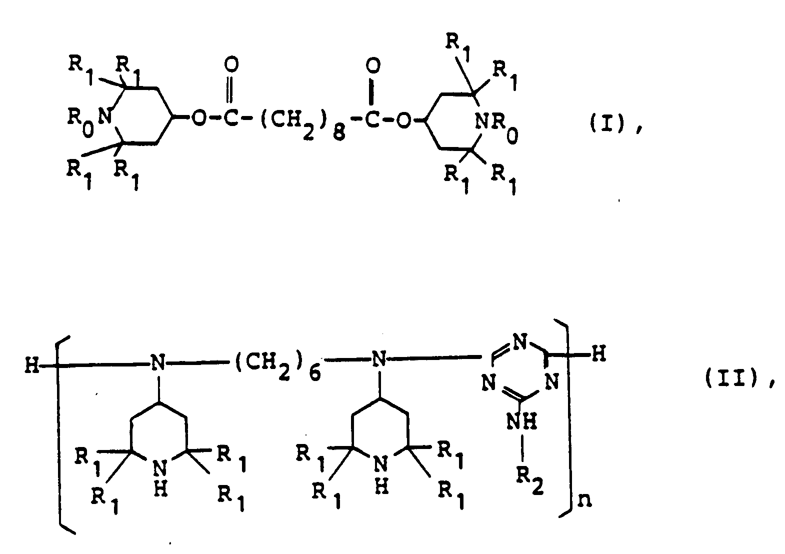 and/or 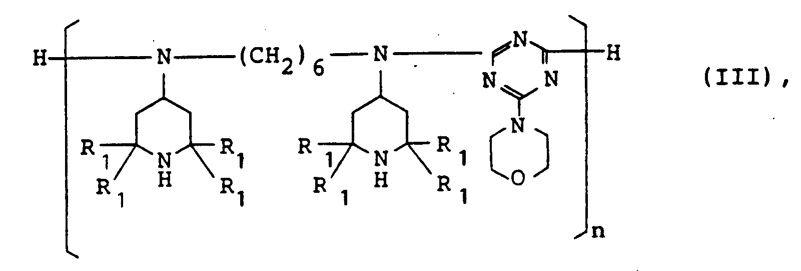 (in which Rₒ is a hydrogen atom or a C₁-C₃ alkyl group.
   R₁ is a C₁-C₃ alkyl group;
   R₂ is a C₆-C₁₀ alkyl group; and
   n is a real number of from 1 to 5); and
(iii) from 0 to 2 parts by weight of at least one compound of the formula: 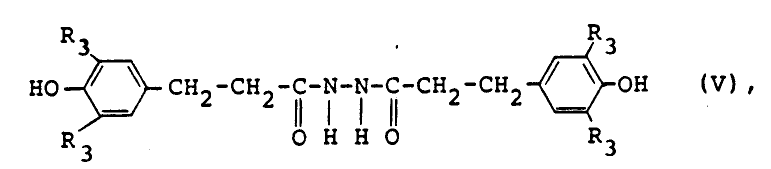 (in which R₃ is a C₁-C₉ alkyl group)
   and/or

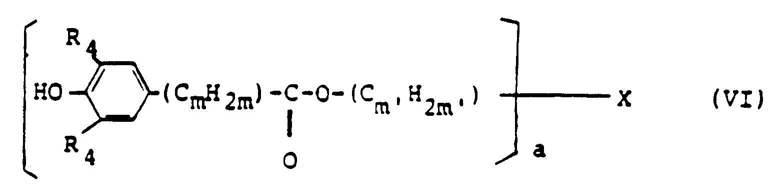

(in which R₄ is a hydrogen atom or a C₁-C₆ alkyl group;
X is C, S, C-C or O-C-C-O and a is 1, 2 or 4;
m is a integer from 1 to 6 and m' is an integer from 1 to 16).

The composition may also contain from 0.01 to 2 parts by weight, per 100 parts by weight of ethylene/α-olefin rubber, of one or more compounds of the formula: 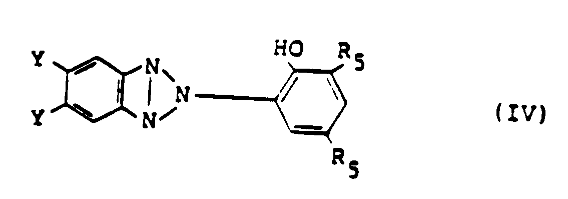
(in which R₅ is a C₁-C₈ alkyl group and Y is a hydrogen or chlorine atom).

Anhydrous silica is used as a reinforcing filler because hydrous silica gives insufficient transparency in terms of total light transmittance and haze value. Fillers such as magnesium carbonate, clay, talc, and titanium white give a very poor transparency.

The average primary particle diameter of the anhydrous silica should be 20 nm or less because sufficient transparency cannot be obtained at larger particle diameters.

If the amount of anhydrous silica employed is outside the range of 10 to 70 parts by weight, per 100 parts by weight of ethylene/α-olefin rubber, the resulting composition has poor processability and physical properties and hence is of no practical use. Above the said range the transparency also becomes poor. Preferably the amount of added anhydrous silica is from 20 to 60 parts by weight phr.

Ethylene/α-olefin rubber compositions usually contain metal oxides, such as zinc oxide, and/or metal carbonates, such as zinc carbonate, added thereto to increase the cure rate and to improve the thermal and weather resistance. However, these are not added in the present invention because the addition of these metal oxides and/or metal carbonates causes a marked decrease of total light transmittance and an increase in haze value.

Stabilizers of formulae (I) to (VI) are used together with the anhydrous silica. At least one stabilizer of formulae (I), (II) and/or (III), or at least such stabilizer and a stabilizer of formula (IV), are indispensable components. The amount to be added is, in both cases. 0.01 to 2 parts by weight, preferably 0.05 to 1 part by weight, most preferably 0.1 to 0.5 part by weight, per 100 parts by weight of ethylene/α-olefin rubber. If the amount is less than the above-mentioned range, satisfactory thermal resistance and weather resistance cannot be obtained. Use of an amount exceeding the range is unnecessary and uneconomical.

In the compounds represented by formulae (II) or (III), the molecular terminal may be in the form of other protective groups which can replace a hydrogen atom. Also, they may be in the form of salts of the amine. These are treated as equivalent with regard to their effect.

The compounds of formulae (V) and (VI) are not indispensable. However, the addition of at least one of these compounds serves to further enhance the effect of the stabilizers. They are used, in general, in an amount of 2 parts by weight or less, preferably from 0.05 to 1 part by weight, most preferably 0.1 to 0.5 part by weight, per 100 parts by weight of ethylene/α-olefin rubber.

Examples of the compounds of formulae (I) to (VI) include the following:

### Formula (I)

Bis (2,2,6,6-tetramethyl-4-piperidyl)sebacate, and
Bis(1,2,2,6,6-pentamethyl-4-piperidyl)sebacate

### Formula (II)

Poly{[6-(1,1,3,3-tetramethyl butyl)amino-1,3,5-triazine-2,4-diyl][2,2,6,6-tetramethyl-4-pyperidyl)amino] hexamethylene[(2,2,6,6-tetramethyl-4-pyperidyl)amino]}

### Formula (III)

Poly{(6-morpholino-S-triazine-2,4-diyl)[2,2,6,6-tetramethyl-4-pyperidy)imino]-hexamethylene[(2,2,6,6-tetramethyl]-4-pyperidyl)imino]}

### Formula (IV)

2-(2ʹ-hydroxy-5ʹ-methylphenyl)benzotriazole, 2-(2ʹ-hydroxy-5ʹ-t-butylphenyl)benzotriazole, 2-(2ʹ-hydroxy-5ʹ-amylphenyl)benzotriazole, 2-(2ʹ-hydroxy-4ʹ-octoxyphenyl)benzotriazole, 2-(2-hydroxy-3ʹ,5ʹdi-t-butylphenyl)benzotriazole, 2-(2ʹ-hydroxy-3ʹ-5ʹ-di-t-amylphenyl)benzotriazole, 2-(2'hydroxy-3'-5'-di-methylphenyl)benzotriazole, 2-(2'-hydroxy-3'-t-butyl-5'-methylphenyl)-5-chlorobenzotriazole, 2-(2'-hydroxy-3'5'-di-t-butylphenyl)-5-chlorobenzotriazole, 2-(2'-hydroxy-3',5'-dimethylphenyl)-5-chlorobenzotriazole.

### Formula (V)

N,N'-Bis[3-(3,5-di-t-butyl-4-hydroxyphenyl)-propionyl] -hydrazine.

### Formula (VI)

Pentaerythritol-tetrakis[3-(3,5-di-t-butyl-4-hydroxy-phenyl)]propionate, triethyleneglycol-bis[3-(3'-t-butyl-5'-methyl-4'-hydroxyphenyl)]propionate, 1,6-hexanediol-bis[3-(3',5'-di-t-butyl-4'-hydroxyphenyl)]-propionate. 2,2-thio-diethylene-bis[3-(3',5'-di-t-butyl-4-hydroxyphenyl)]propionate, 2,2-thio-diethylene-bis[3-(3',5'-di-t-butyl-4'-hydroxyphenyl)]propionate, octadecyl-3-(3',5'-di-t-butyl-4'-hydroxyphenyl)propionate.

The compounds of formulae (I) to (VI), are all already known as stabilizers for polyolefin type plastics [see, for example, Japanese patent Application Kokoku (Post-Exam. Publn.) No. 27,624/27, Japanese Patent Application Kokai (Laid-Open) Nos. 62,835/81 and 5.349/76, etc.], but are wholly unknown as stabilizers for vulcanized rubber compositions.

In consideration of the fact that a vulcanized rubber composition differs from ordinary polyolefin type resins not only in polymer species but also markedly in composition and process steps in respect of the former's havng been incorporated with many kinds of additives including reinforcing agents, vulcanizing agents, and vulcanization accelerators and further having been subjected to a vulcanization step, it is quite surprising that, as disclosed by this invention, these compounds exhibit good effect on a specific rubber composition, namely an ethylene/α-olefin rubber containing anhydrous silica.

The unvulcanized rubber composition of ethylene/α-olefin rubber together with anhydrous silica and stabilizers is subjected to vulcanization. Since vulcanization with sulphur or the like compounds does not give a vulcanized rubber composition of high transparency, vulcanization is conducted with an organic peroxide.

A wide variety of organic peroxides may be used for the above purpose and may be one or more kinds of organic peroxides including diacyl peroxides, dialkyl peroxides, peroxyesters, and perketals. As specific examples thereof, mention may be made of benzoyl peroxide, 1,1-di-t-butylperoxy-3,3,5-trimethylcyclohexane, di-t-butylperoxydiisopropylbenzene, dicumylperoxide and 2,5-dimethyl-2,5-di(t-butyperoxy)-hexane. These peroxides are suitably added in an amount of 1 to 5 parts by weight per 100 parts by weight of the rubber component.

As occasion demands, ethylene dimethacrylate, trimethylpropane trimethacrylate, trillayl isocyanurate, and like compounds may be added as a co-crosslinking agent for organic peroxide vulcanization.

The method of vulcanization itself to be used for the above-mentioned organic peroxide vulcanization is not specifically limited and may be any conventional method known to the art. However, vulcanization is usually conducted at 140 to 200°C for 2 to 60 minutes.

The terms "ethylene/α-olefin rubber" used herein means a copolymer of ethylene and one or more α-olefins or a copolymer of ethylene, one or more α-olefins and one or more unconjugated dienes. Examples of α-olefins include propylene, 1-butene, 1-pentene, and 1-hexene. Examples of unconjugated dienes include dicyclopentadiene, ethlidenenorbornene, 1,4-hexadiene, methyltetrahydroindene, and methylnorbornene.

Softeners, plasticizers, processing aids, stearic acid, etc. known to the rubber industry may be added to the composition as occasion demands.

In order that the invention may be well understood the following examples are given by a way of illustrations only.

### Examples 1 to 5 and Comparative Examples 1 to 4

Mixtures compounded according to Table 1 were kneaded by use of a 6-inch roll and then vulcanized in a press under the vulcanization conditions shown in Table 1 to obtain sheets of 1 mm thickness and of 2 mm thickness.

The total light transmittance and the haze value of the 1 mm thick sheets obtained above were determined according to ASTM D1003-61.

The 2 mm thick sheets were used to prepare No. 3 dumbbell test pieces specified in JIS K6301, which were then used for a tensile test, hardness test, thermal aging resistance test, and weather resistance test.

The thermal aging resistance was tested by aging the test piece in a Geer oven at 120°C for 120 hours, then letting it stand at room temperature for one day, and subjecting it to a tensile test.

The weather resistance was tested by exposing the test piece to a fade meter using carbon arc light (Standard UV Longlife Fade Meter, mfd. by Suga Shikenki Co., Ltd.) for 360 hours and then observing its appearance.

The results of these tests are shown in Table 2.

### Examples 6 to 10 and Comparative Examples 5 to 7

Mixtures compounded according to Table 3 were kneaded by use of a 6-inch roll and then vulcanized in a press under the vulcanization conditions shown in Table 3 to obtain sheets of 1 mm thickness and of 2 mm thickness.

Various kinds of tests were conducted in the same manner as in Examples 1 to 5 and Comparative Examples 1 to 4. The results thus obtained are shown in Table 4.

Notes 1 to 15 for Tables 1 and 3 and Note 16 for Table 3 are given below.
- Note 1:: Ethylene-propylene-ethylidenenorbornene terpolymer, mfd. by Sumitomo Chemical Co., Ltd.
- Note 2:: Ethylene-propylene rubber, mfd. by Sumitomo Chemical Co., Ltd.
- Note 3:: Hydrous silica, mfd. by Nippon Silica Kogyo K.K.; average particle diameter of primary particles: 16 nm
- Note 4:: Anhydrous silica, mfd. by Nippon Aerosil Co.; average particle diameter of primary particles: 12 nm
- Note 5:: Anhydrous silica, mfd. by Nippon Aerosil Co.; average particle diameter of primary particles: 7 nm
- Note 6:: Paraffinnic process oil, mfd. by Idemitsu Kosan Co., Ltd.
- Note 7:: 1,1-Di-tert-butylperoxy-3,3,5-trimethylcyclohexane, mfd. by Nippon Oil & Fats Co., Ltd.
- Note 8:: 2,5-Dimethyl-2,5-di(t-butylperoxy)hexane, mfd. by Nippon Oil & Fats Co., Ltd.
- Note 9:: Bis (2,2,6,6-tetramethyl-4-piperidyl)sebacate, mfd. by Ciba-Geigy (Japan) Limited
- Note 10:: N,N-Bis[3-(3,5-di-t-butyl-4-hydroxyphenyl)-propionyl]hydrazine, mfd. by Ciba-Geigy (Japan) Limited
- Note 11:: Pentaerythritoltetrakis[3,(3,5-di-t-butyl-4-hydroxyphenyl)Propionate], mfd. by Ciba-Geigy (Japan) Limited
- Note 12:: 2-(2ʹ-hydroxy-3ʹ-t-butyl-5ʹ-methylphenyl-5-chlorobenzotriazole, mfd. by Sumitomo Chemical Co., Ltd.
- Note 13:: Composed represented by the following structural formula 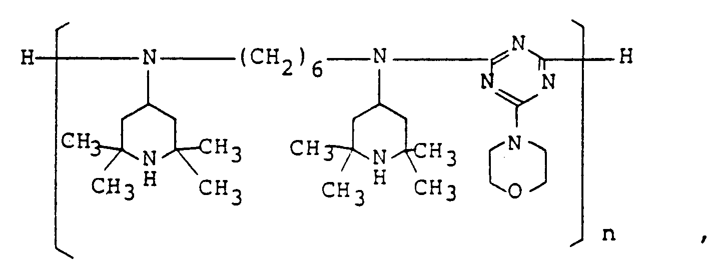 mfd. by Sumitomo Chemical Co., Ltd.
- Note 14:: Compound represented by the following structural formula 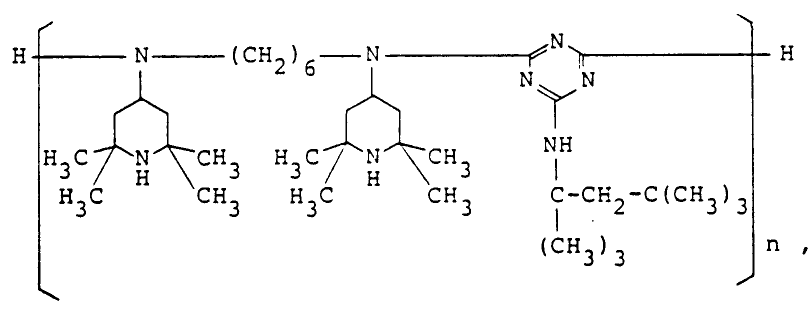 mfd. by Ciba-Geigy (Japan) Limited
- Note 15:: 2-(2ʹ-hydroxy-3ʹ-5ʹ-t-amylphenyl)benzotriazole, mfd. by Sumitomo Chemical Co., Ltd.

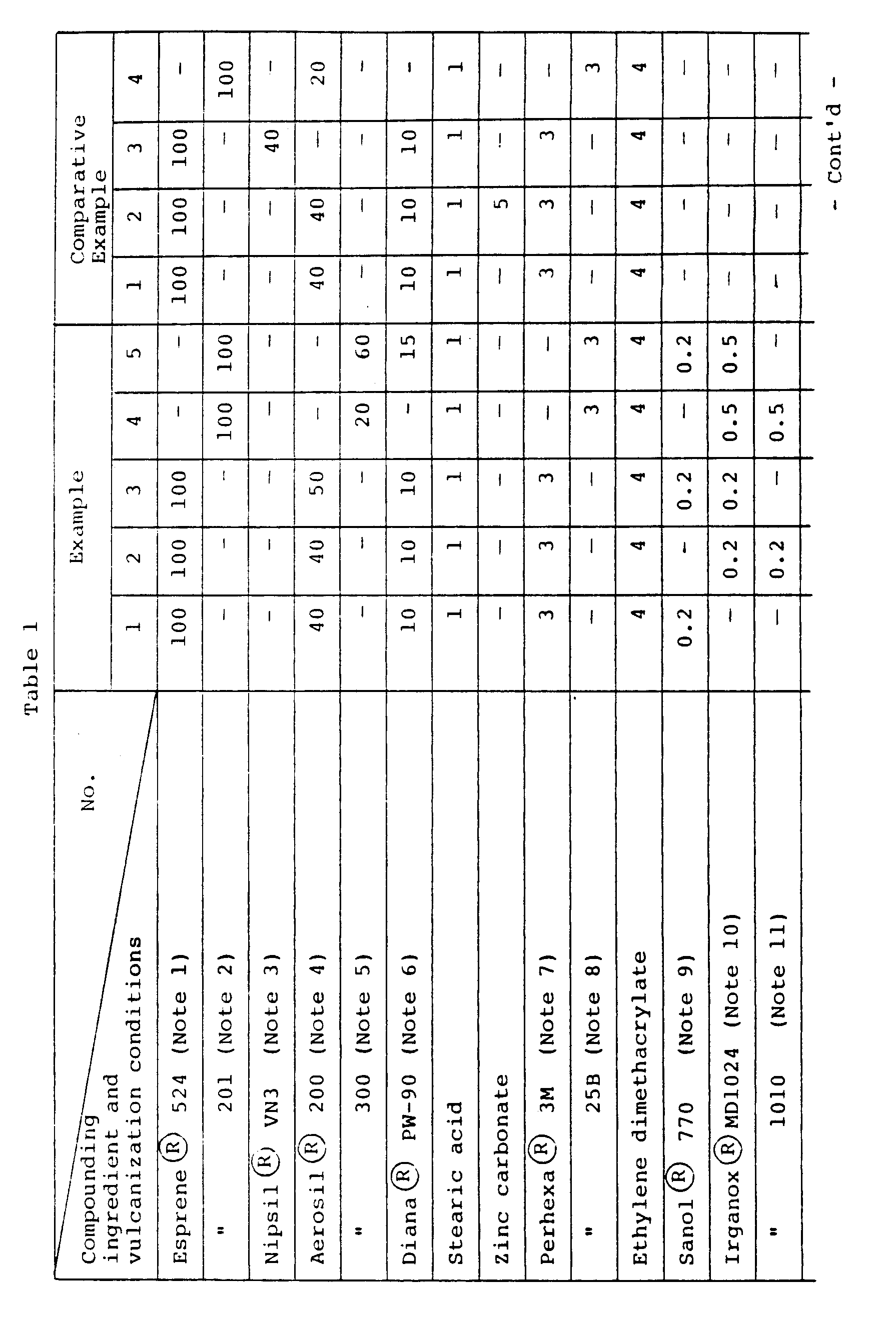

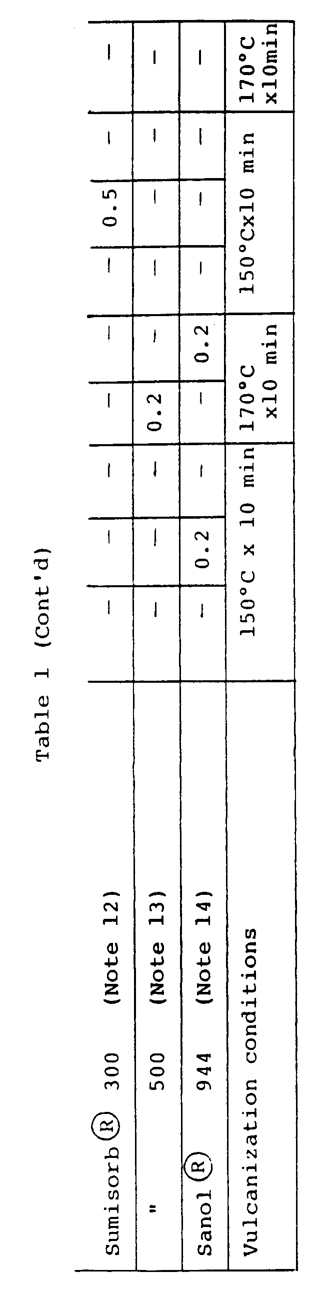

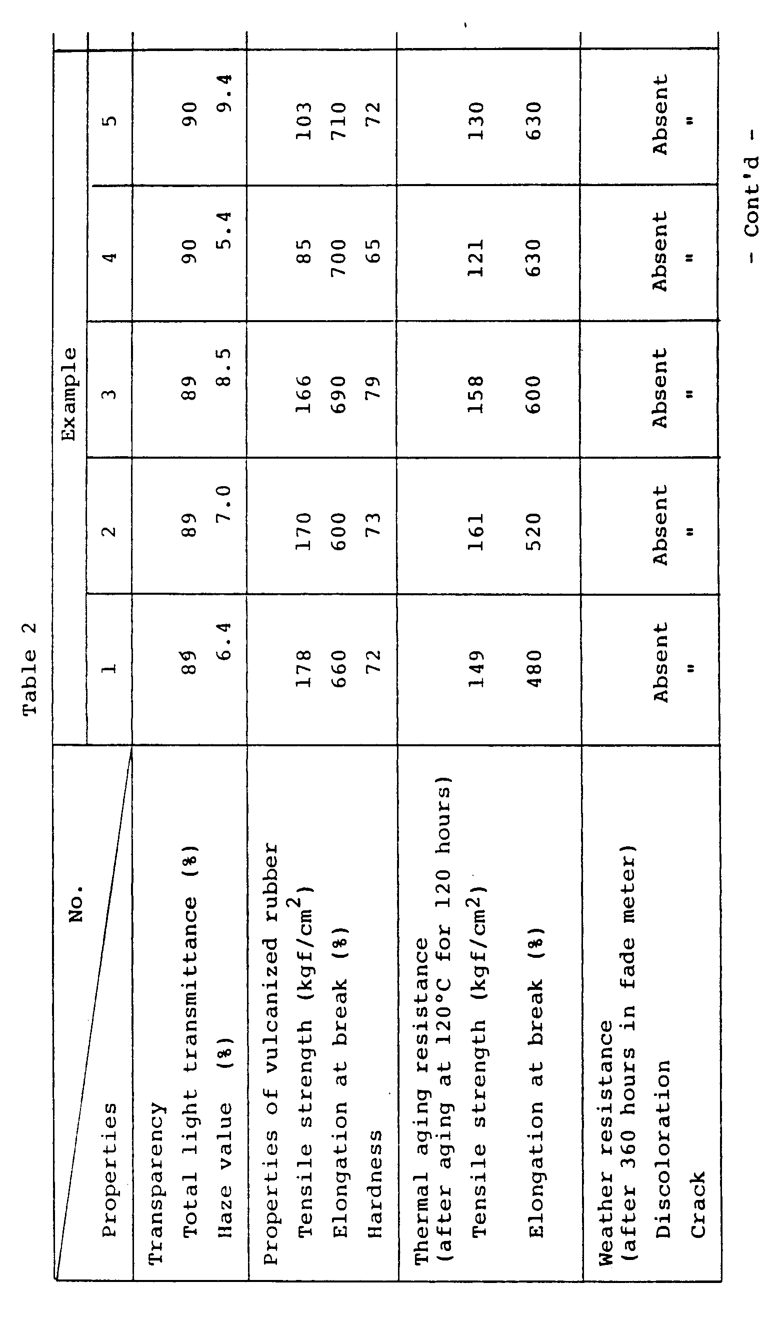

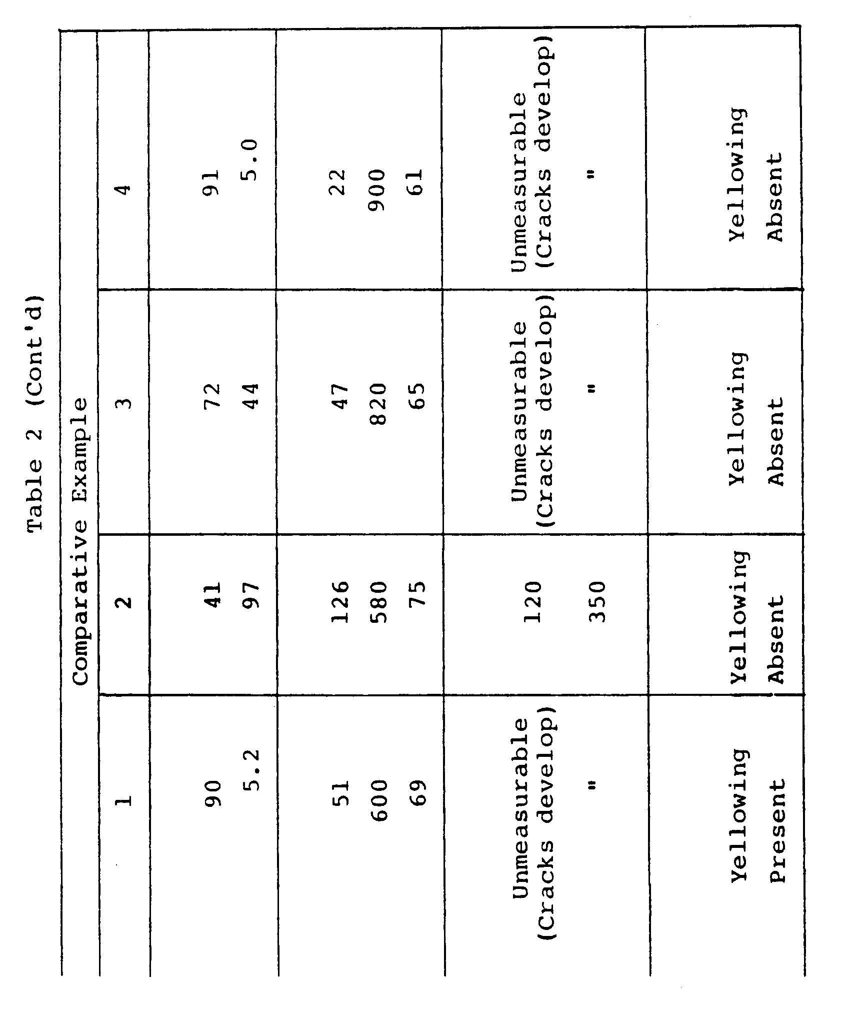

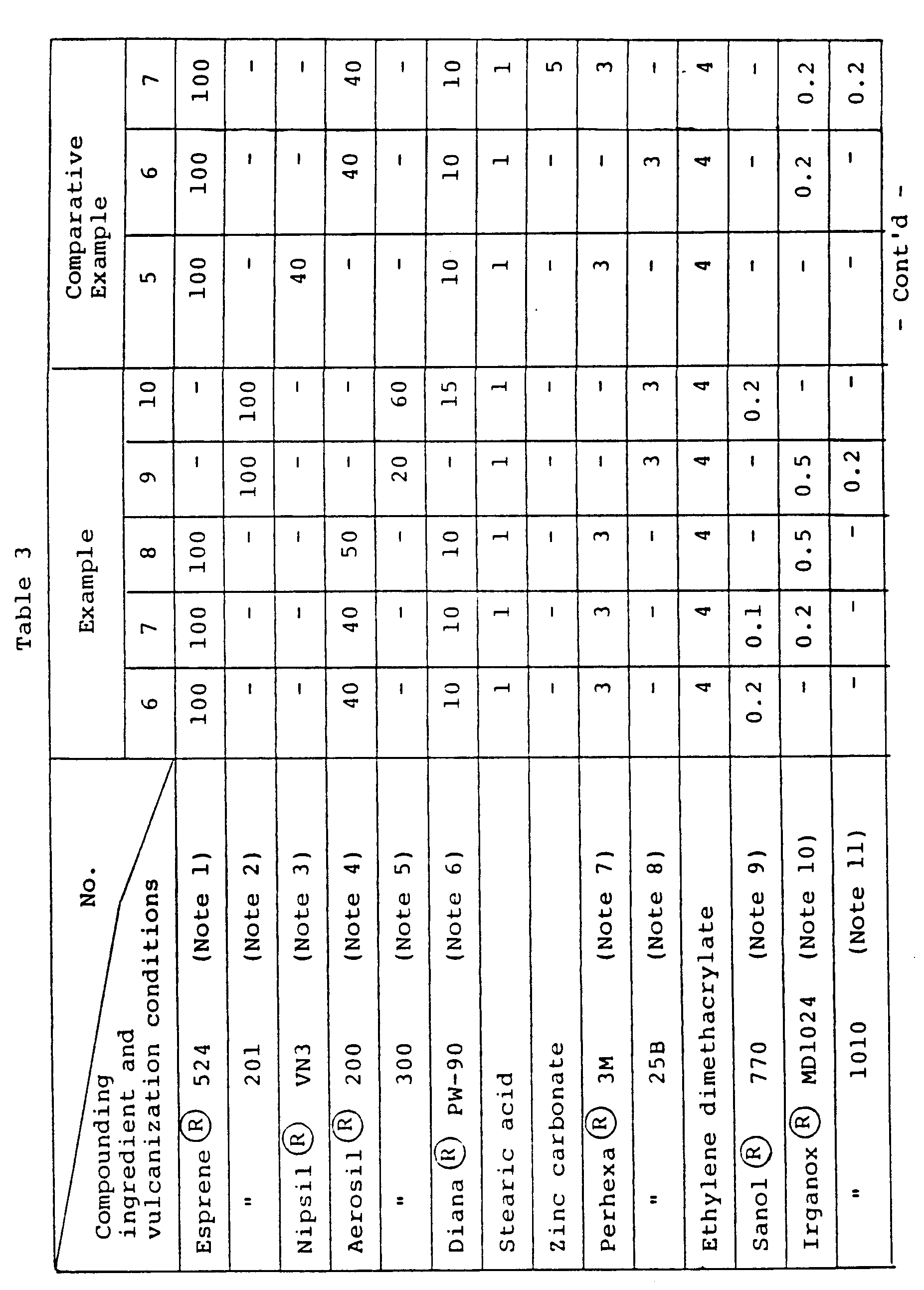

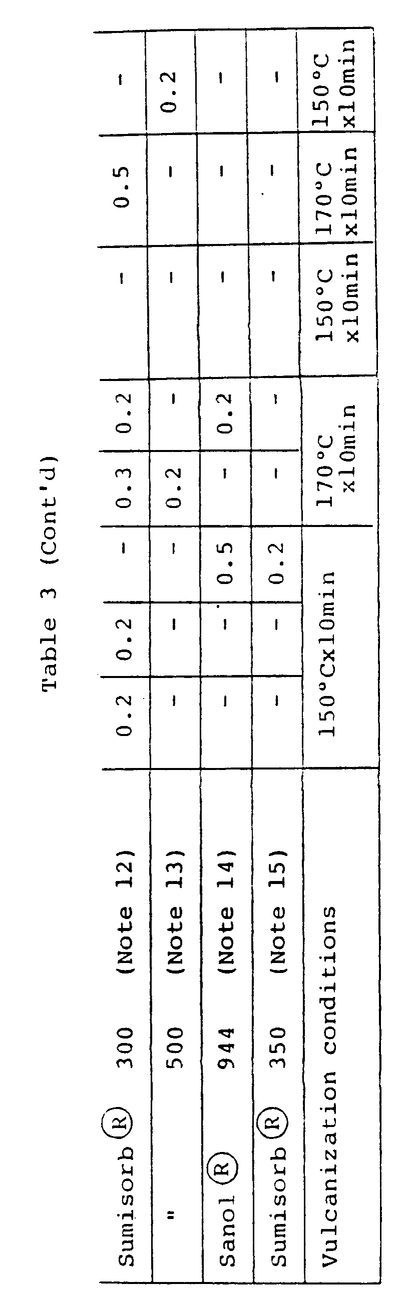

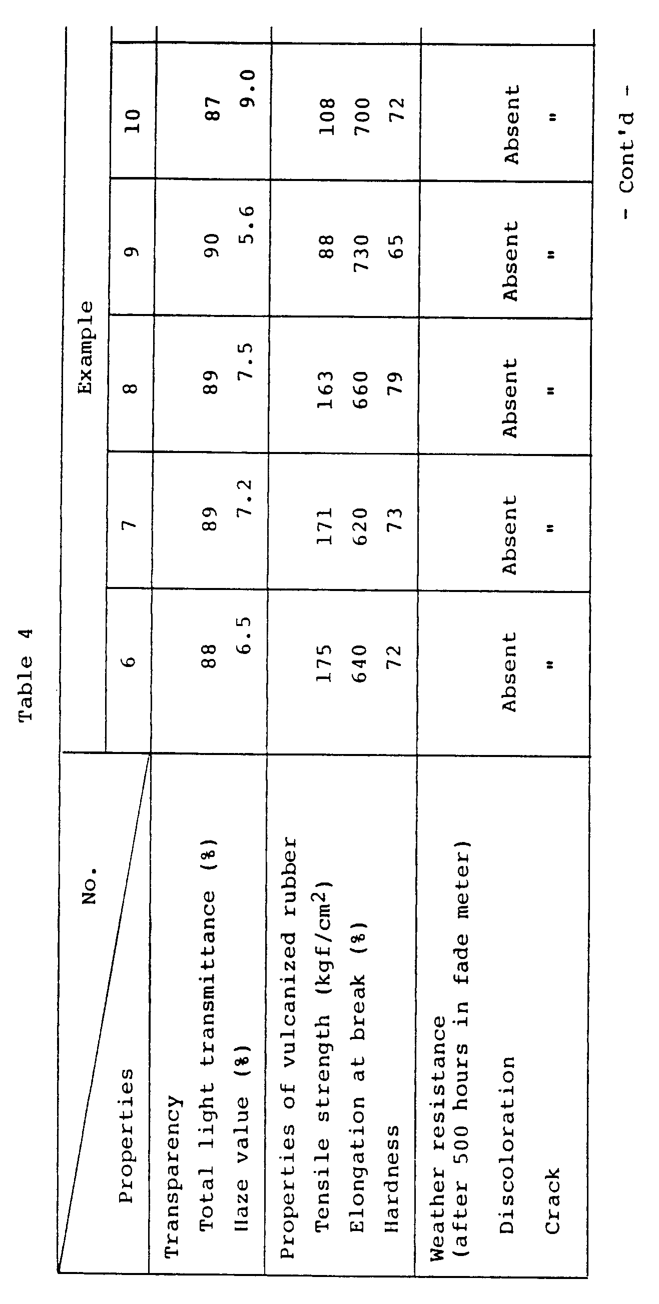

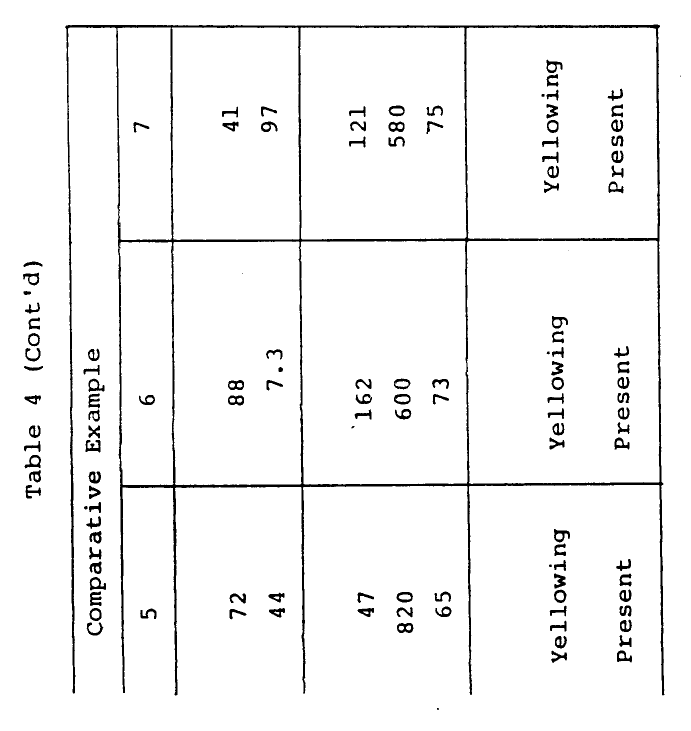

## Claims

1. A process for the production of a vulcanized ethylene/α-olefin rubber composition which comprises vulcanizing, with an organic peroxide, an unvulcanized rubber composition comprising an ethylene/α-olefin rubber containing no metal oxide nor metal carbonate added thereto and containing per 100 parts by weight of ethylene/α-olefin rubber:
(i) from 10 to 70 parts by weight of anhydrous silica having an average primary particle diameter of 20 nm or less;
(ii) from 0.01 to 2 parts by weight of at least one compound of the formula: 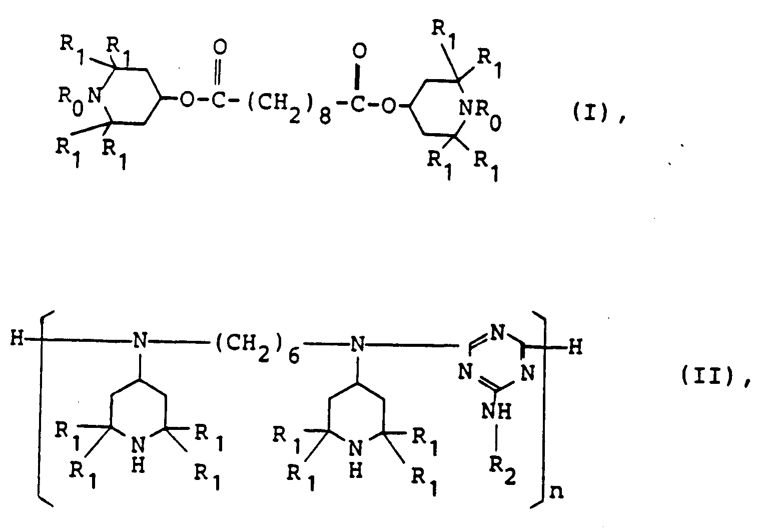 and/or 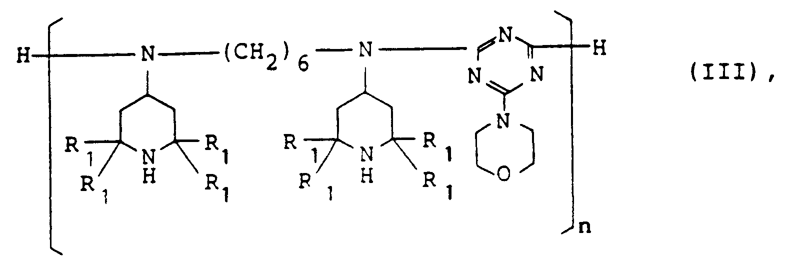 (in which Rₒ is a hydrogen atom or a C₁-C₃ alkyl group; R₁ is a C₁-C₃ alkyl group; R₂ is a C₆-C₁₀ alkyl group; and n is real number from 1 to 5); and
(iii) from 0 to 2 parts by weight of at least one compound of the formula: 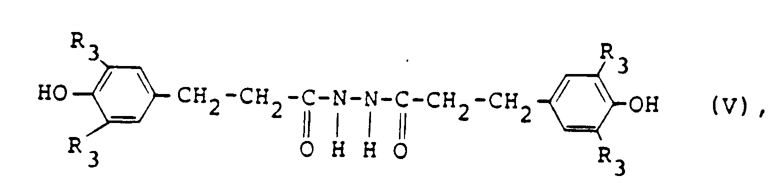 (in which R₃ is a C₁-C₉ alkyl group); and/or 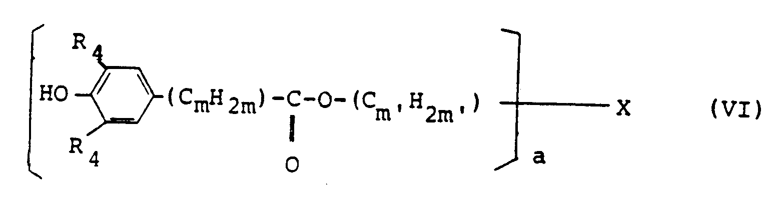 (in which R₄ is a C₁-C₆ alkyl group; X is C, S, C-C or O-C-C-O and is 1,2 or 4; m is an integer from 1 to 6; and mʹ is an integer from 1 to 16).

2. A process as claimed in claim 1 in which the vulcanized composition also contains, per 100 parts by weight of ethylene/α-olefin rubber, from 0.1 to 2 parts by weight of a compound of the formula: 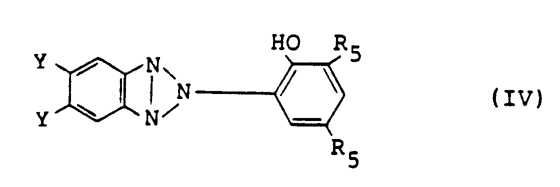 (in which R₅ is a hydrogen atom or a C₁-C₈ alkyl group, and Y is hydrogen or chlorine atom).

3. A process as claimed in claim 1 or claim 2, in which the compound of formula (I) is Bis(2,2,6,6-tetramethyl-4-piperidyl)-sebacate or Bis(1,2,2,6,6-tetramethyl-4-piperidyl)-sebacate.

4. A process as claimed in claim 1 or claim 2 in which the compound of formula (II) is Poly{[6-(1,1,3,3-tetramethyl butyl)amino-1,3,5-triazine 2,4-diyl)]-[2,2,6,6-tetramethyl-4-pyperidyl)imino]-hexamethylene-[2,2,6,6-tetramethyl-4-pyperidyl)amino]}.

5. A process as claimed in claim 1 or claim 2, in which the compound of formula (III) is Poly{(6-morpholino-s-triazine-2,4-diyl)[(2,2,6,6-tetramethyl-4-pyperidy)imino]-hexamethylene-{(2,2,6,6-tetramethyl-4-pyperidyl)imino)imin o]}.

6. A process as claimed in claim 1 or 2 in which the compound of formula (IV) is 2-(2ʹ-hydroxy-3ʹ-t-butyl-5ʹ-methylphenyl)-5-chlorobenzotriazole or 2-(2ʹ-hydroxy-3ʹ,5ʹ-t-amylphenyl)benzotriazole.

7. A process as claimed in claim 1 or claim 2 in which the compound of formula (V) is N,Nʹ-Bis[3-(3,5-di-t-butyl-4-hydroxyphenyl)-propionyl]hydrazine.

8. A process as claimed in claim 2 in which the compound of formula (VI) is pentaerythritol tetrakis[3-(3,5-di-t-butyl-4-hydroxyphenyl)]-propionate, triethyleneglycol-bis[3-(3ʹ-t-butyl-5ʹ-methyl-4ʹ-hydroxyphenyl)]propionate, 1,6-hexanediol-bis[3-(3ʹ,5ʹ-di-t-butyl-4ʹ-hydroxyphenyl)]propionate, 2,2-thio-diethylene-bis[3-(3ʹ,5ʹ-di-t-butyl-4ʹ-hydroxyphenyl)]propionate, or octadecyl-3-(3ʹ,5ʹ-di-t-butyl-4ʹ-hydroxyphenyl)propionate.

9. A process as claimed in any of the preceding claims in which the ethylene/α-olefin rubber is a copolymer formed of ethylene and at least one α-olefin or a copolymer formed of ethylene, at least one α-olefin, and at least one unconjugated diene.

10. A process as claimed in claim 9, in which the α-olefin is propylene, 1-butene,1-pentene, or 1-hexene and the unconjugated diene is dicyclopentadiene, ethylidenorbornene, 1,4-hexadiene, methyltetrahydroindene, or methylnorbornene.

11. A process as claimed in any one of the preceding claims in which the organic peroxide is a diacyl peroxide, dialkyl peroxide, peroxyester or perketal.

12. A vulcanized rubber composition when obtained by a process as claimed in any one of the preceding claims.

## Patentansprüche

1. Verfahren zur Herstellung einer vulkanisierten Ethylen/α-Olefin-Gummizusammensetzung, das umfaßt, das Vulkanisieren einer nicht-vulkanisierten Gummizusammensetzung, die einen Ethylen/α-Olefingummi umfaßt, der weder hinzugefügtes Metalloxid noch Metallcarbonat enthält und der pro 100 Gew.-Teile des Ethylen/α-Olefingummis enthält:
(i) 10 bis 70 Gew.-Teile wasserfreies Siliciumdioxid mit einem mittleren Primärteilchendurchmesser von 20 nm oder weniger;
(ii) 0,01 bis 2 Gew.-Teile wenigstens einer Verbindung der Formel 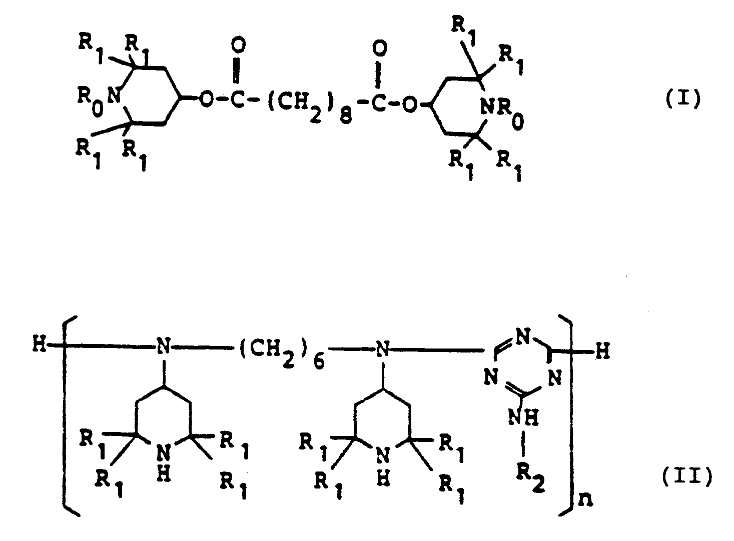 und/oder 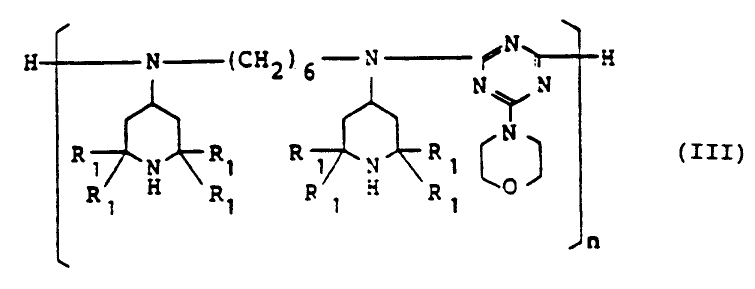 (in denen R₀ ein Wasserstoffatom oder ein C₁-C₃-Alkylrest ist, R₁ ein C₁-C₃-Alkylrest ist, R₂ ein C₆-C₁₀-Alkylrest ist und n eine reelle Zahl von 1 bis 5 ist); und
(iii) 0 bis 2 Gew.-Teile wenigstens einer Verbindung der Formel 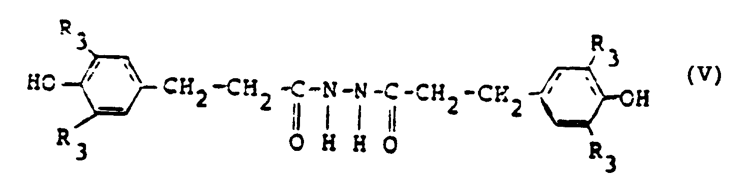 (in der R₃ ein C₁-C₉-Alkylrest ist); und/oder 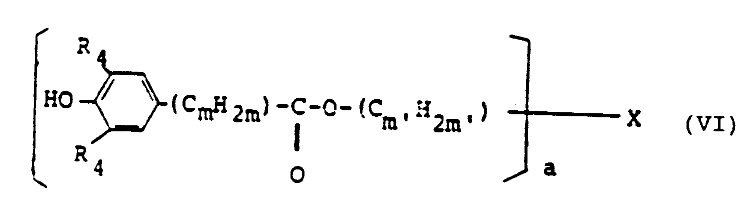 (in der R₄ ein C₁-C₆-Alkylrest ist; X C, S, C-C oder O-C-C-O ist und a 1, 2 oder 4 ist; m eine ganze Zahl von 1 bis 6 ist; und m' eine ganze Zahl von 1 bis 16 ist), mit einem organischen Peroxid.

2. Verfahren nach Anspruch 1, in dem die vulkanisierte Zusammensetzung auch 100 Gew.-Teile eines Ethylen/α-Olefingummis, 0,1 bis 2 Gew.-% einer Verbindung der Formel 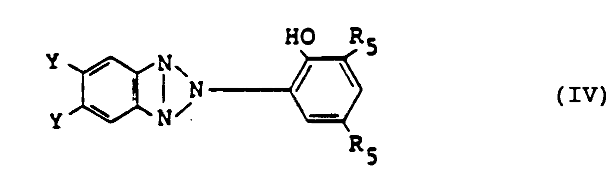 enthält, (in der R₅ ein Wasserstoffatom oder ein C₁-C₈-Alkylrest ist und Y ein Wasserstoffatom oder ein Chloratom ist.

3. Verfahren nach Anspruch 1 oder 2 in dem die Verbindung der Formel (I) Bis(2,2,6,6-tetramethyl-4-piperidyl)-sebacat oder Bis(1,2,2,6,6-tetramethyl-4-piperidyl)-sebacat ist.

4. Verfahren nach Anspruch 1 oder 2, in dem die Verbindung der Formel (II) Poly{[6-(1,1,3,3-tetramethylbutyl)amino-1,3,5-triazin-2,4-diyl)]-[2,2,6,6-tetramethyl-4-piperidyl)imino]-hexamethylen-[2,2,6,6-tetramethyl-4-piperidyl)amino]} ist.

5. Verfahren nach Anspruch 1 oder 2, in dem die Verbindung der Formel (III) Poly{(6-morpholino-s-triazin-2,4-diyl)[(2,2,6,6-tetramethyl-4-pyperidyl)imino]-hexamethylen-[(2,2,6,6-tetramethyl-4-pyperidyl)imino)imino]} ist.

6. Verfahren nach Anspruch 1 oder 2, in dem die Verbindung der Formel (IV) 2-(2'-Hydroxy-3'-t-butyl-5'-methylphenyl)-5-chlorbenzotriazol oder 2-(2'-Hydroxy-3',5'-t-amylphenyl)benzotriazol ist.

7. Verfahren nach Anspruch 1 oder 2, in dem die Verbindung der Formel (V) N,N'-Bis[3-(3,5-di-t-butyl-4-hydroxyphenyl)-propionyl]hydrazin ist.

8. Verfahren nach Anspruch 2, in dem die Verbindung der Formel (VI) Pentaerythritol-tetrakis-[3-(3,5-di-t-butyl-4-hydroxyphenyl)]propionat, Triethylenglycol-bis[3-(3'-t-butyl-5'-methyl-4'-hydroxyphenyl)]propionat, 1,6-Hexandiol-bis[3-(3',5'-di-t-butyl-4'-hydroxyphenyl)]-propionat, 2,2-Thio-diethylen-bis[3'-(3',5'-di-t-butyl-4'-hydroxyphenyl)]propionat oder Octadecyl-3-(3',5'-di-t-butyl-4'-hydroxyphenyl)propionat ist.

9. Verfahren nach einem der vorhergehenden Ansprüche, in dem der Ethylen/α-Olefingummi ein Copolymer ist, das aus Ethylen und mindestens einem α-Olefin gebildet ist, oder ein Copolymer ist, das aus Ethylen, mindestens einem α-Olefin und mindestens einem nicht-konjugierten Dien gebildet ist.

10. Verfahren nach Anspruch 9, in dem das α-Olefin Propylen, 1-Buten, 1-Penten oder 1-Hexen ist und das nicht-konjugierte Dien Dicyclopentadien, Ethylidennorbornen, 1,4-Hexadien, Methyltetrahydroinden oder Methylnorbornen ist.

11. Verfahren nach einem der vorhergehenden Ansprüche, in dem das Organische Peroxid ein Diacylperoxid, Dialkylperoxid, Peroxyester oder Perketal ist.

12. Vulkanisierte Gummizusammensetzung, erhalten nach einem Verfahren wie in einem der vorhergehenden Ansprüche beansprucht.

## Revendications

1. Procédé de production d'une composition de caoutchouc éthylène/α-oléfine vulcanisée, consistant à vulcaniser, avec un peroxyde organique, une composition de caoutchouc non vulcanisée comprenant un caoutchouc éthylène/α-oléfine auquel n'ont été ajoutés ni oxyde métallique ni carbonate métallique et contenant, pour 100 parties an poids de caoutchouc éthylène/α-oléfine,
(i) de 10 à 70 parties en poids de silice anhydre ayant un diamètre moyen de particules primaires de 20 nm ou moins;
(ii) de 0,01 à 2 parties en poids d'au moins un composé de formule 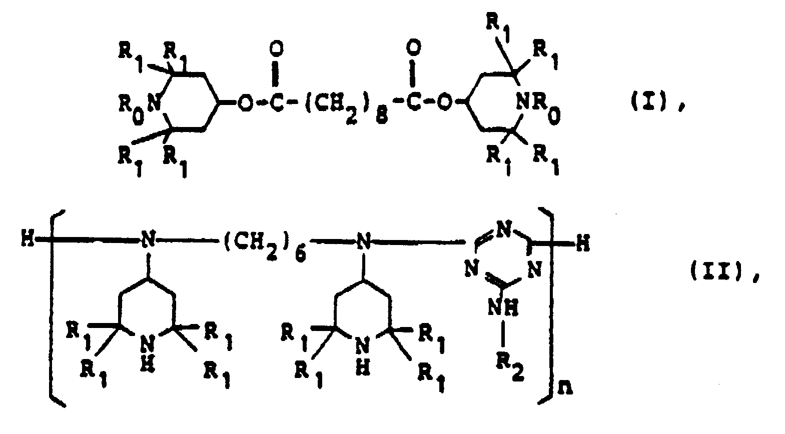 et/ou 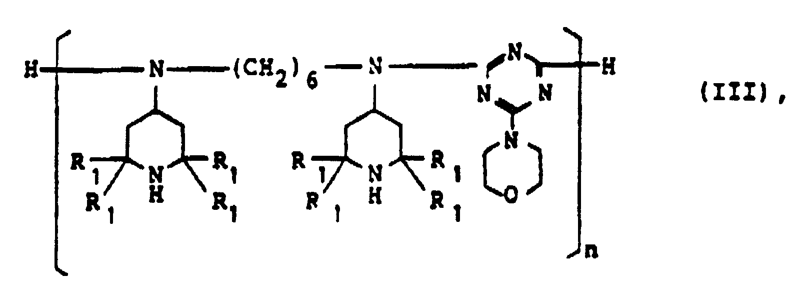 (dans lesquelles R₀ est un atome d'hydrogène ou un groupement alkyle en C₁-C₃; R₁ est un groupement alkyle en C₁-C₃; R₂ est un groupement alkyle en C₆-C₁₀; et n est un nombre réel de 1 à 5); et
(iii) de 0 à 2 parties en poids d'au moins un composé de formule 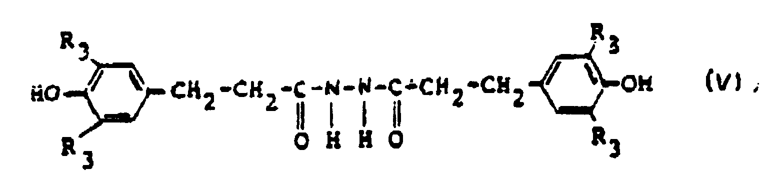 (dans laquelle R₃ est un groupement alkyle en C₁-C₉); et/ou 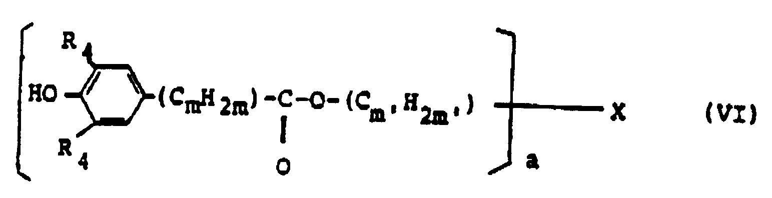 (dans laquelle R₄ est un groupement alkyle en C₁-C₆; X est mis pour C, S, C-C ou O-C-C-O et a est mis pour 1, 2 ou 4; m est un nombre entier de 1 à 6; et m' est un nombre entier de 1 à 16).

2. Procède selon la revendication 1, dans lequel la composition vulcanisée contient aussi, pour 100 parties en poids de caoutchouc éthylène/α-oléfine, de 0,1 à 2 parties on poids d'un composé de formule 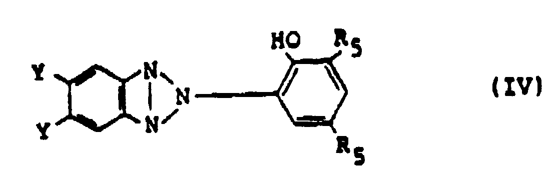 (dans laquelle R₅ est un atome d'hydrogène ou un groupement alkyle en C₁-C₈ et Y est un atome d'hydrogène ou de chlore).

3. Procédé selon la revendication 1 ou 2, dans lequel le composé de formule (I) est le sébacate de bis-(2,2,6,6-tétraméthyl-4-pipéridyle) ou le sébacate de bis(1,2,2,6,6-pentaméthylpipéridyle).

4. Procédé selon la revendication 1 ou 2, dans lequel le composé de formule (II) est la poly{[6-(1,1,3,3-tétraméthylbutyl)-aminotriazine-2,4-diyl)]-[(2,2,6,6-tétraméthyl-4-pipéridyl)imino]hexaméthylène-(2,2,6,6-tétraméthyl-4-pipéridyl)amine]}.

5. Procédé selon la revendication 1 ou 2, dans lequel le composé de formule (III) est la poly{(6-morpholino-S-triazine-2,4-diyl)[(2,2,6,6-tétraméthyl-4-pipéridyl)-imino]hexaméthylène[(2,2,6,6-tétraméthyl-4-piperidyl)imine]},

6. Procédé selon la revendication 1 ou 2, dans lequel le composé de formule (IV) est le 2-(2'-hydroxy-3'-t-butyl-5'-méthylphényl)-5-chlorobenzotriazole ou le 2-(2'-hydroxy-3',5,-di-t-amylphènyl)benzotriazole.

7. Procédé selon la revendication 1 ou 2, dans lequel le composé de formule (V) est la N,N'-bis[3-(3,5-di-t-butyl-4-hydroxyphényl)propionyl]hydrazine.

8. Procédé selon la revendication 2, dans lequel le composé de formule (VI) est le tétrakis[3-(3,9-di-t-butyl-4-hydroxyphényl)]propionate de pentaérythrol, le bis[3-(3'-t-butyl-5'-méthyl-4'-hydroxyphényl)]propionate de triéthylèneglycol, le bis[3-(3',5'-di-t-butyl-4'-hydroxyphényl]propionate de 1,6-hexanediol, le bis[3-(3',5'-di-t-butyl-4'-hydroxyphényl)]propionate de 2,2-thiodiéthylène ou le 3-(3',5'-di-t-butyl-4'-hydroxyphényl)propionate d'octadécyle.

9. Procédé selon l'une quelconque des revendications 1 à 8, dans Lequel le caoutchouc éthylène/α-oléfine est un copolymère formé d'éthylène et d'au moins une α-oléfine ou un copolymère formé d'éthylène, d'au moins une α-oléfine et d'au moins un diène non conjugué.

10. Procédé selon la revendication 9, dans lequel l'α-oléfine est le propylène, le 1-butène, le 1-pentène ou le 1-hexène et le diène non conjugue est la dicyclopentadiène, l'éthylidènenorbornène, le 1,4-hexadiène, le méthyltétrahydroindène ou le méthylnorbornène.

11. Procédé selon l'une quelconque des revendications 1 à 10, dans lequel le peroxyde organique est un peroxyde de diacyle, un peroxyde de dialkyle, un peroxyester ou un percétal.

12. Composition de caoutchouc vulcanisée, obtenue par un procédé selon l'une quelconque des revendications précédentes.
